# EUROPEAN PATENT SPECIFICATION

(11) **EP 2 702 433 B1**
(45) Date of publication and mention of the grant of the patent: **22.03.2017**
(21) Application number: 12706096.0
(22) Date of filing: 08.02.2012
(51) Int. Cl.: G01V 1/18

(54) **SEISMIC SENSOR NODE WITH SERRATED ANNULAR SKIRT**
SEISMISCHER SENSORKNOTEN MIT GEZAHNTEM RINGFÖRMIGEM ROCK
NOEUD DE CAPTEUR SISMIQUE À JUPE ANNULAIRE DENTELÉE

(30) Priority: 15.02.2011 GB 201102576
(43) Date of publication of application: 05.03.2014
(73) Proprietor: Go Science Group Ltd, Tortola VG1110 (VG)
(72) Inventor: GOSLING, Harry George Dennis, Bristol, South Gloucestershire BS35 3RW (GB)
(74) Representative: Ribeiro, James Michael
(86) International application number: PCT/GB2012/050280
(87) International publication number: WO 2012/110786

(56) References cited:
- EP-A2- 1 674 888
- FR-A1- 2 446 494
- US-A- 5 339 281
- US-A1- 2005 052 951
- DEVERCHERE J ET AL: "DEPLOIEMENT D'UN RESEAU DE SISMOGRAPHES SOUS-MARINS ET TERRESTRES EN DOMAINE LIGURE (MEDITERRANEE) : CAMPAGNE SISBALIG 1", COMPTES RENDUS DE L ACADEMIE DES SCIENCES: SERIE II: MECANIQUE-PHYSIQUE-CHIMIE-ASTRONOMIE, EDITIONS SCIENTIFIQUES & MEDICALES ELSEVIER, FR, vol. 313, no. 9, 24 October 1991 (1991-10-24), pages 1023-1030, XP000266314, ISSN: 1251-8069

## Description

### FIELD OF THE INVENTION

The present invention relates to a seismic sensor node, and a method of acquiring seismic data with a seismic sensor node.

### BACKGROUND OF THE INVENTION

A known seismic sensor node is described in EP 1674888 A2. Each sensor unit is held by a carrier and connected to a cylindrical skirt with a serrated cutting edge. A problem associated with a cylindrical skirt is that the skirt can experience ellipsoid or modal oscillation, which can distort the seismic vibrations which it transmits to the sensor unit.

### SUMMARY OF THE INVENTION

A first aspect of the invention provides a seismic sensor node comprising one or more seismic sensors; and an annular skirt defining an annular axis, wherein the annular skirt has a cutting edge which appears serrated when viewed at a right angle to the annular axis, and wherein the skirt has a series of ribs and channels which terminate at the cutting edge so that the cutting edge has an undulating shape when viewed parallel with the annular axis.

A second aspect of the invention provides a method of acquiring seismic data with the seismic sensor node of the first aspect of the invention, the method comprising embedding the cutting edge at least partially into the seabed; and acquiring seismic data from the seabed with the seismic sensor(s).

The ribbed shape of the skirt makes it particularly resistant to ellipsoid or modal oscillation, so that it can transmit seismic vibrations to the seismic sensor(s) with minimal distortion, attenuation or damping.

Typically the cutting edge appears as a series of teeth when viewed at a right angle to the annular axis, and preferably each of the ribs terminates in a respective one of the teeth.

Typically the teeth taper inwardly when viewed at a right angle to the annular axis.

Typically the cutting edge has a curved notch between each adjacent pair of teeth.

Typically the ribs taper inwardly when viewed parallel with the annular axis.

Typically the channels appear curved when viewed parallel with the annular axis.

The one or more seismic sensors may comprise a geophone. Optionally a hydrophone may also be provided.

The annular skirt may surround a duct which increases in cross-sectional area as it extends towards the cutting edge of the skirt. Typically the duct surrounded by the annular skirt has a first end adjacent to the cutting edge and a second end remote from the cutting edge, and wherein the cross-sectional area of the first end of the duct is greater than the cross-sectional area of the second end of the duct.

The node typically has an annular support frame which carries the seismic sensor(s), wherein the skirt is attached to the annular support frame.

### BRIEF DESCRIPTION OF THE DRAWINGS

Embodiments of the invention will now be described with reference to the accompanying drawings, in which:
Figure 1 is a perspective view of a seismic sensor node;
Figure 2 is a vertical sectional view of the sensor node;
Figure 3 is a bottom view of the sensor node;
Figure 4 is a plan view of the sensor node;
Figure 5 is a plan view of the sensor node with the hydrophone and its support frame removed;
Figure 6 is a perspective view of a seismic sensor node according to a second embodiment of the invention; and
Figure 7 is a bottom view of the node of Figure 6.

### DETAILED DESCRIPTION OF EMBODIMENT(S)

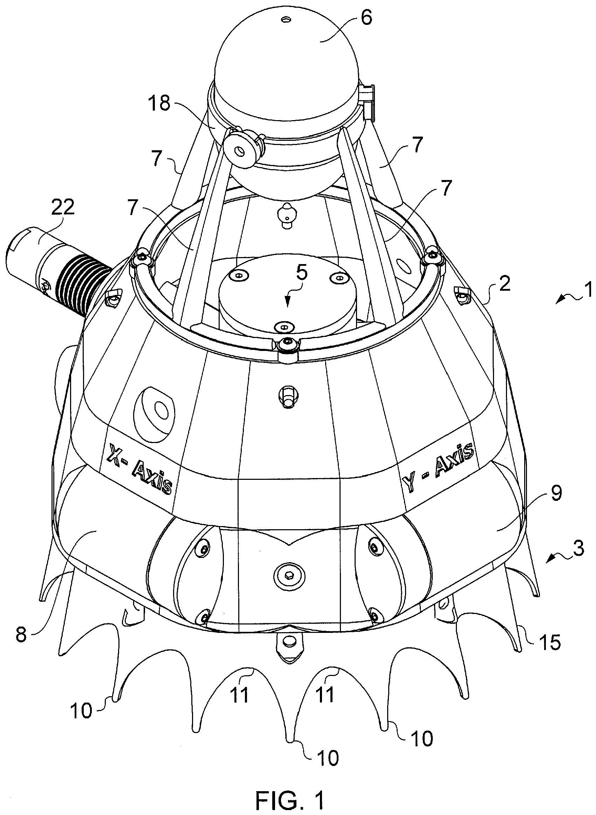

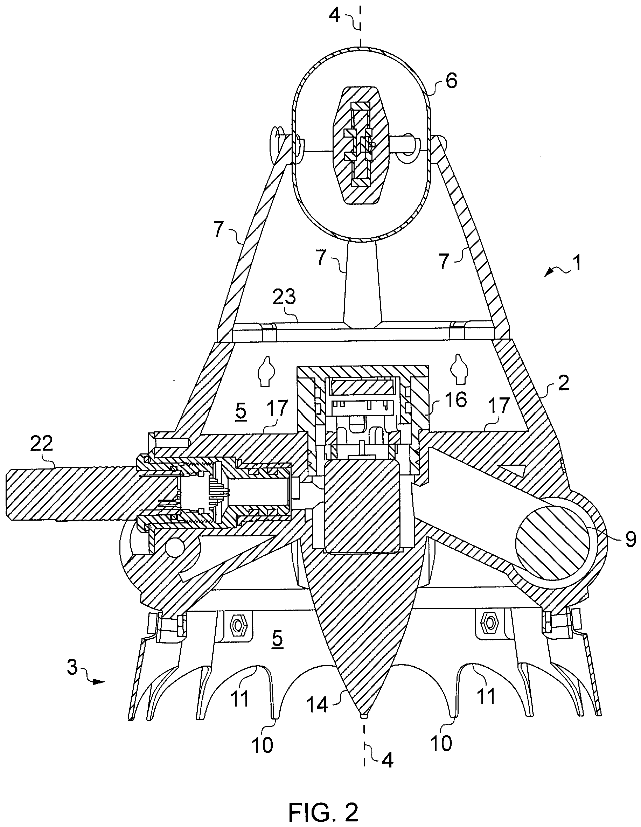

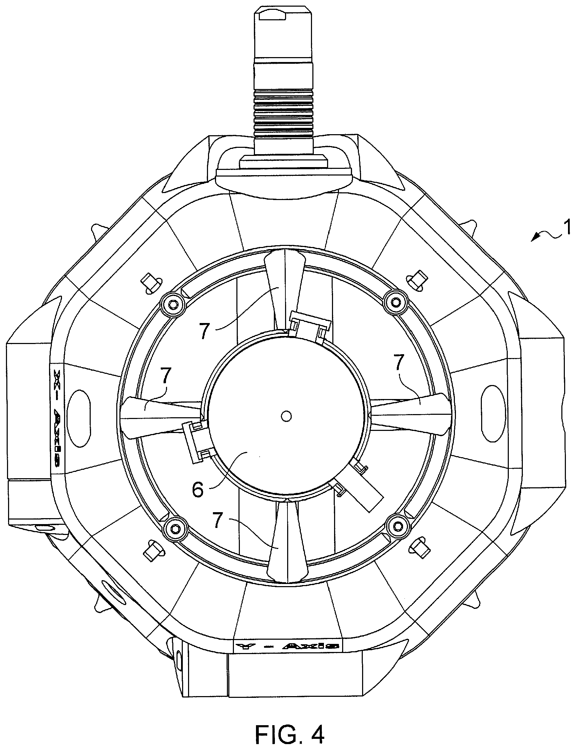

A seismic sensor node 1 shown in Figures 1-5 comprises an annular support frame 2 carrying an annular skirt 3 at its lower edge. The support frame 2 and the skirt 3 together define a central annular axis 4 (shown in Figure 2) and surround a duct 5 which is open at both its upper and lower ends to permit liquid to flow through the duct. As can be seen in Figure 2, the duct 5 is flared so that it increases in cross-sectional area as it extends towards the cutting edge of the skirt 3.

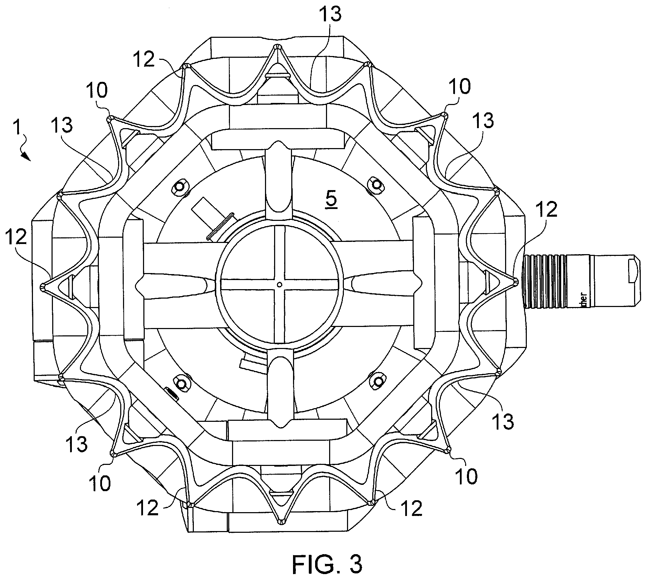

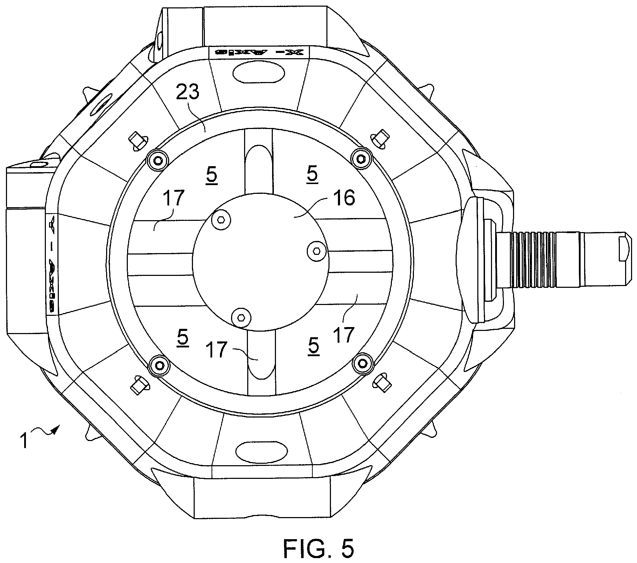

The duct has a first (lower) end adjacent to the skirt 3 and a second (upper) end remote from the skirt 3. A comparison of Figure 3 with Figure 5 shows that the cross-sectional area of the first end of the duct (as defined by the skirt 3) is over twice the size of the cross-sectional area of the second end of the duct (as defined by the upper edge 23 of the support frame 2). The diameter of the skirt 3 is of the order of 13-15cm (5-6 inches).

A Z-axis geophone sensor 16 is mounted within the duct 5 by four struts 17. An X-axis geophone sensor 8 and a Y-axis geophone sensor 9 are carried by the annular body 2 outside the duct 5. In an alternative embodiment (not shown) the X and Y geophone sensors may be mounted on struts within the duct as well as the Z-axis geophone sensor 16. The struts 17 also carry a pair of accelerometers (not shown) which measure the angle of inclination of the node to the vertical.

The skirt 3 tapers or flares outwardly towards a cutting edge at its lower periphery. The cutting edge appears as a series of inwardly tapering teeth with points 10 when viewed from the side at a right angle to the annular axis as shown in Figures 1 and 2. The cutting edge has a curved notch 11 between each adjacent pair of teeth.

The skirt also has a series of ribs 12 and channels 13 which run towards the cutting edge and terminate at the cutting edge so that the cutting edge has an undulating shape when viewed from below parallel with the annular axis as shown in Figure 3. Each of the ribs 12 terminates in a respective one of the teeth 10 at its lower edge. Each rib 12 tapers inwardly to a ridge 15 which runs away from the cutting edge, and the channels 13 appear curved when viewed from below as shown in Figure 3, providing a focusing effect on shear wave seismic energy.

A ring 18 with four struts 7 is mounted to the upper edge of the support frame 2. The ring 18 carries a hydrophone sensor 6.

A data port 22 is connected to the geophones 16,8,9 and the hydrophone 6. A cable (not shown) can be connected to the data port 22 to transmit data to/from the sensors.

When in use, the skirt 3 is embedded at least partially into the seabed so that seabed material passes into the duct 5. Since the duct has a larger cross-sectional area towards the cutting edge at its base, the seabed material is compressed inwardly by the tapered frustoconical walls of the duct 5 as it passes through the duct. The tapered shape of the duct also means that the centre of gravity of the node is lower than it would be for a cylindrical node - thus increasing the stability of the node compared with a cylindrical one. Seismic data can then be acquired with the seismic sensors 16,8,9,6.

Shear waves are transmitted to the geophones 16,8,9 by the compressed seabed material, and also by the skirt 3 and support frame 2. The undulating shape of the skirt makes it particularly resistant to ellipsoid or modal oscillation, so that it can transmit shear waves to the geophones with minimal distortion, attenuation or damping. Also, the compression of the seabed material squeezes out water from the material, making it more dense so that it transmits the shear waves more efficiently.

A spike 14 extends down from the geophone 16 to a point which lies in the same plane as the points 10 of the teeth. The spike 14 penetrates the seabed along with the skirt 3 and transmits shear waves to the geophone 16. Pressure waves are sensed by the hydrophone 6.

The sensor node may be towed to and from the seabed on a flexible tether attached to the ring 18, dropped from above the seabed so it sinks down, or deployed by a robotic arm from the rear of an underwater vehicle. In the first two cases, water flows through the duct 5 as the sensor passes through the water. In this case the ribs 12 and channels 13 provide hydrodynamic benefits in that they act as so-called "bluff grooves" which enable the node to fly well at low speeds and make it more stable in roll.

The node 1 is negatively buoyant with a weight in water of the order of 0.5-1.1kg. This helps to compress the seabed material passing through the duct and encourages positive coupling of seismic energy with the sensors.

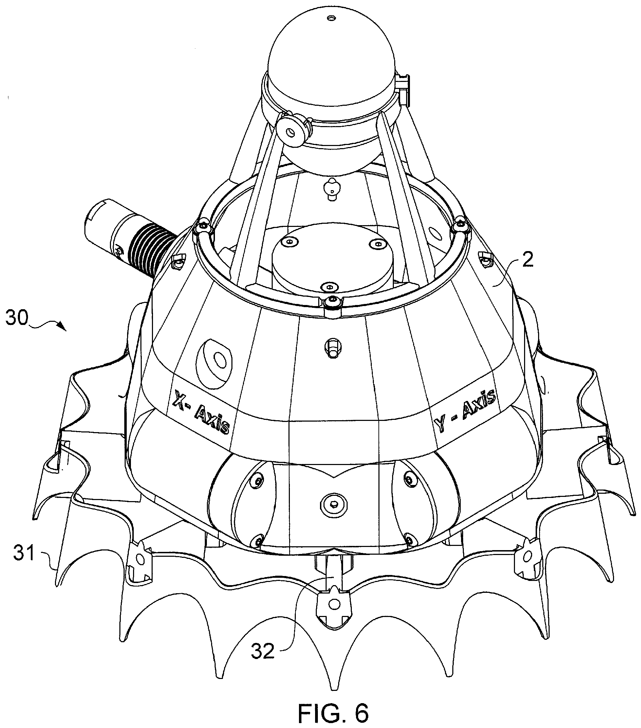

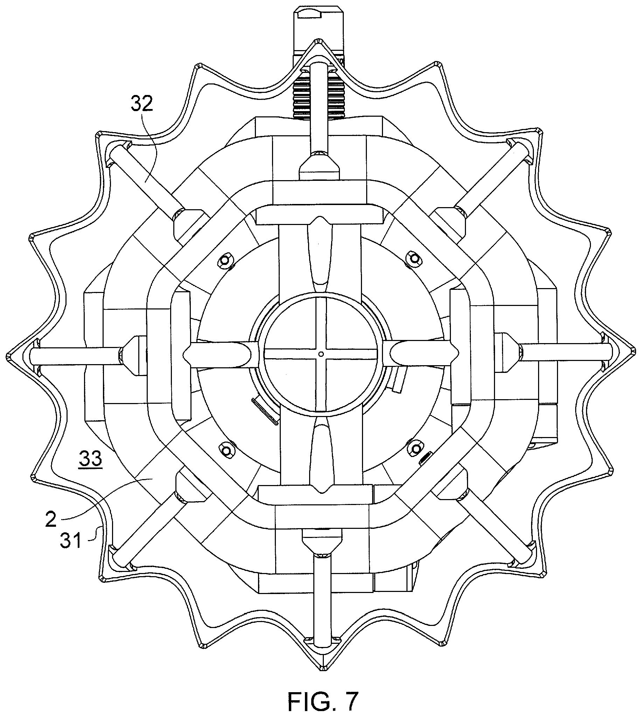

Figures 6 and 7 show a seismic sensor node 30 according to a second embodiment of the invention, in which the skirt 3 is replaced by a wider skirt 31 which is wider at both ends than the base of the frame 2. The skirt 31 is mounted to the base of the frame 2 by eight struts (one of which is labelled 32 in Figures 6 and 7) leaving an open slot 33 between the frame 2 and the skirt 31. The larger skirt 31 increases the coupling area of the skirt, and makes the node more likely to orient itself vertically.

Although the invention has been described above with reference to one or more preferred embodiments, it will be appreciated that various changes or modifications may be made without departing from the scope of the invention as defined in the appended claims.

## Claims

1. A seismic sensor node (1) comprising one or more seismic sensors (8,9); and an annular skirt (3) defining an annular axis, wherein the annular skirt has a cutting edge which appears serrated when viewed at a right angle to the annular axis, **characterized in that** the skirt has a series of ribs (12) and channels (13) which terminate at the cutting edge so that the cutting edge has an undulating shape when viewed parallel with the annular axis.

2. The node of claim 1 wherein the cutting edge appears as a series of teeth (10) when viewed at a right angle to the annular axis.

3. The node of claim 2 wherein each of the ribs (12) terminates in a respective one of the teeth (10).

4. The node of claim 2 or 3 wherein the teeth (10) taper inwardly when viewed at a right angle to the annular axis.

5. The node of claim 2, 3 or 4 wherein the cutting edge has a curved notch between each adjacent pair of teeth.

6. The node of any preceding claim wherein the ribs (12) taper inwardly when viewed parallel with the annular axis.

7. The node of any preceding claim wherein the channels (13) appear curved when viewed parallel with the annular axis.

8. The node of any preceding claim wherein the one or more seismic sensors comprises a geophone (8,9).

9. The node of any preceding claim wherein the annular skirt (3) surrounds a duct (5) which increases in cross-sectional area as it extends towards the cutting edge of the skirt.

10. The node of claim 9 wherein the duct (5) surrounded by the annular skirt has a first end adjacent to the cutting edge and a second end remote from the cutting edge, and wherein the cross-sectional area of the first end of the duct is greater than the cross-sectional area of the second end of the duct.

11. The node of any preceding claim further comprising an annular support frame (2) which carries the seismic sensor(s), wherein the skirt (3) is attached to the annular support frame.

12. A method of acquiring seismic data with the seismic sensor node (1) of any preceding claim, the method comprising embedding the cutting edge at least partially into the seabed; and acquiring seismic data from the seabed with the seismic sensor(s).

## Patentansprüche

1. Seismischer Sensorknoten (1), der einen oder mehrere seismische Sensoren (8, 9) und einen ringförmigen Mantel (3) aufweist, der eine ringförmige Achse bestimmt, wobei der ringförmige Mantel eine Schneidkante aufweist, die gezackt erscheint, wenn sie in einem rechten Winkel zu der ringförmigen Achse betrachtet wird, **dadurch gekennzeichnet, dass** der Mantel eine Reihe von Rippen (12) und Kanälen (13) aufweist, die an der Schneidkante auf eine solche Weise enden, dass sie in einer gewellten Form erscheinen, wenn sie parallel zu der ringförmigen Achse betrachtet werden.

2. Knoten nach Anspruch 1, wobei die Schneidkante als eine Reihe von Zähnen (10) erscheint, wenn sie in einem rechten Winkel zu der ringförmigen Achse betrachtet wird.

3. Knoten nach Anspruch 1, wobei die Rippen jeweils in einem Entsprechenden der Zähne (10) endet.

4. Knoten nach Anspruch 2 oder 3, wobei die Zähne (10) sich nach innen verjüngen, wenn sie in einem rechten Winkel zu der ringförmigen Achse betrachtet werden.

5. Knoten nach Anspruch 2, 3 oder 4, wobei die Schneidkante eine gekrümmte Einkerbung zwischen jedem angrenzenden Paar der Zähne aufweist.

6. Knoten nach einem der vorgehenden Ansprüche, wobei die Rippen (12) sich nach innen verjüngen, wenn sie parallel zu der ringförmigen Achse betrachtet werden.

7. Knoten nach einem der vorgehenden Ansprüche, wobei die Kanäle (13) gekrümmt erscheinen, wenn sie parallel zu der ringförmigen Achse betrachtet werden.

8. Knoten nach einem der vorgehenden Ansprüche, wobei der eine seismische Sensor oder die mehreren seismische Sensoren ein Seismophon (8, 9) aufweisen.

9. Knoten nach einem der vorgehenden Ansprüche, wobei der ringförmige Mantel (3) eine Leitung (5) umgibt, deren Querschnittsfläche anwächst, wenn sie sich zu der Schneidkante des Mantels erstreckt.

10. Knoten nach Anspruch 9, wobei die Leitung, die von dem ringförmigen Mantel umgeben ist, ein erstes Ende, das an die Schneidkante angrenzend ist, und ein zweites Ende, das von der Schneidkante entfernt ist, aufweist und wobei die Querschnittsfläche des ersten Endes der Leitung größer als die Querschnittsfläche des zweiten Endes der Leitung ist.

11. Knoten nach einem der vorgehenden Ansprüche, welcher ferner einer ringförmigen Trägerrahmen (2) aufweist, der den einen seismischen Sensor oder die mehreren seismische Sensoren trägt, wobei der Mantel an den ringförmigen Trägerrahmen angebracht ist.

12. Verfahren zur Erfassung seismischer Daten mit dem seismischen Knoten (1) nach einem der vorgehenden Ansprüche, wobei das Verfahren aufweist: ein Einbetten der Schneidkante wenigstens teilweise in den Meeresboden, und ein Erfassen der seismischen Daten von dem Meeresboden mit dem einen seismischen Sensor oder den mehreren seismischen Sensoren.

## Revendications

1. Noeud de capteur sismique (1) comprenant un ou plusieurs capteurs sismiques (8, 9) ; et une jupe annulaire (3) définissant un axe annulaire, dans lequel la jupe annulaire a un bord coupant qui semble dentelé lorsqu'on l'observe sous un angle droit par rapport à l'axe annulaire, **caractérisé en ce que** la jupe est dotée d'une série de nervures (12) et de canaux (13) qui se terminent au bord coupant de sorte que le bord coupant a une forme ondulée lorsqu'on l'observe de façon parallèle à l'axe annulaire.

2. Noeud selon la revendication 1 dans lequel le bord coupant apparaît sous forme d'une série de dents (10) lorsqu'on l'observe sous un angle droit par rapport à l'axe annulaire.

3. Noeud selon la revendication 2 dans lequel chacune des nervures (12) se termine dans une dent respective (10).

4. Noeud selon la revendication 2 ou 3 dans lequel la dent (10) est effilée vers l'intérieur lorsqu'on l'observe sous un angle droit par rapport à l'axe annulaire.

5. Noeud selon la revendication 2, 3 ou 4 dans lequel le bord coupant a une encoche incurvée entre chaque paire de dents adjacentes.

6. Noeud selon la revendication précédente dans lequel les nervures (12) sont effilées vers l'intérieur lorsqu'elles sont observées parallèlement à l'axe annulaire.

7. Noeud selon l'une quelconque des revendications précédentes dans lequel les canaux (13) apparaissent incurvés lorsqu'ils sont observés parallèlement à l'axe annulaire.

8. Noeud selon l'une quelconque des revendications précédentes dans lequel un ou plusieurs capteurs sismiques comprennent un géophone (8, 9).

9. Noeud selon l'une quelconque des revendications précédentes dans lequel la jupe annulaire (3) entoure une gaine (5) qui augmente dans une section transversale alors qu'elle s'étend vers le bord coupant de la jupe.

10. Noeud selon la revendication 9 dans lequel la gaine (5) entourée par la jupe annulaire a une première extrémité adjacente au bord coupant et une seconde extrémité éloignée du bord coupant, et dans lequel la surface transversale de la première extrémité de la gaine est supérieure à la surface transversale de la seconde extrémité de la gaine.

11. Noeud selon l'une quelconque des revendications précédentes comprenant en outre un châssis de support annulaire (2) qui transporte le(s) capteur(s) sismique(s), dans lequel la jupe (3) est attachée au châssis de support annulaire.

12. Procédé d'obtention de données sismiques avec le noeud de capteur sismique (1) selon l'une quelconque des revendications précédentes, le procédé comprenant l'enfouissement du bord coupant au moins partiellement dans le fond marin ; et l'obtention de données sismiques du fond marin avec le(s) capteur(s) sismique(s).
